# EUROPEAN PATENT SPECIFICATION

(11) **EP 3 293 647 B1**
(45) Date of publication and mention of the grant of the patent: **03.11.2021**
(21) Application number: 17190487.3
(22) Date of filing: 11.09.2017
(51) Int. Cl.: G06F 16/48

(54) **METHODS OF STORING ESSENCE DATA IN MEDIA FILE SYSTEMS**
VERFAHREN ZUM SPEICHERN VON ESSENZDATEN IN MEDIENDATEISYSTEMEN
PROCÉDÉS DE STOCKAGE DE DONNÉES ESSENTIELLES DANS DES SYSTÈMES DE FICHIERS MULTIMÉDIA

(30) Priority: 09.09.2016 GB 201615348
(43) Date of publication of application: 14.03.2018
(73) Proprietor: Grass Valley Limited, Berkshire RG14 2NX (GB)
(72) Inventor: CAIN, James, Newbury, Berkshire RG14 2NX (GB)
(74) Representative: Leach, Sean Adam

(56) References cited:
- EP-A1- 1 901 304
- EP-A1- 2 996 050

## Description

### Field of the Invention

The present invention concerns methods of storing essence data in media file systems. Essence data is image and/or audio data which provides the content of media files stored in a media file system.

### Background of the Invention

Media applications and systems, for example video editing or streaming of video over the Internet, often require that only a particular time range of the media in the file be used. For example, a user of a video editing program may wish to edit only a particular time range of a video file, or a user may wish to view only the middle portion of a video file. In order to allow this to be done, it is common for media file formats to divide a file into segments corresponding to particular time ranges, and for an index to be provided that declares where the segments can be found in the file.

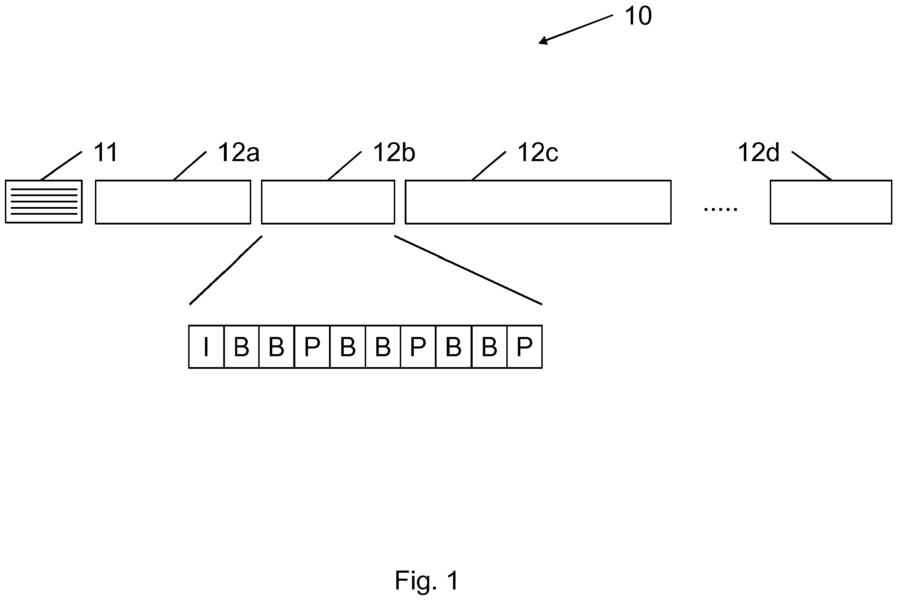

An example of such a media file format is MPEG-4. The structure of an MPEG-4 file is shown in Figure 1. The file 10 comprises an index 11, and a plurality of GOPs ("groups of pictures") 12a, 12b, 12c to 12d. A GOP is a series of frames (images) making up a particular sequence of video.

The frames contained by the GOP 12b are shown as an example in Figure 1. The GOP 12b contain an initial I-frame (intra coded frame), which is a frame that is coded independently of other frame, i.e. the whole frame can be decoded without referring to any other frames. This is followed by various P-frames (predictive coded frames) and B-frames (bipredictive coded frames), which contain motion-compensated difference information relative to other frames, so can only be decoded with reference to other frames that have already been decoded.

The number of frames in a GOP (and the types of frames it contains) can depend on various factors, including the type of images the video contains, as this can affect how often it is desirable to have an I-frame. GOPs will usually also have different file sizes (i.e. be made up of a different numbers of bytes) even where they contain the same number of frames. One reason for this is that a frame may be compressed, with the result that its size depends upon the extent of compression that is possible (which in turn depends upon the content the image of the frame). Another reason is that the size of P-frames and B-frames will depend on the extent to which they differ from the frames upon which they depend.

As the size of GOPs varies, an index is required to allow frames for particular times to be found, i.e. an index relating frame times to byte locations in the file. Such an index can only be generated in full once all essence data is available, and so in media file formats in which the index is positioned at the start of the file, two passes are needed to create the file, a first pass to create the GOPs and a second pass to create the index. Even where only the GOPs are required and not the index, it can still be necessary to wait for the index to be generated before using the GOPs, as conventionally the final file will be created by copying the GOPs after the index and then deleting the original copy of the GOPs, meaning that any process using the original copy of the GOPs may find that they are deleted while they are still required.

In order to alleviate this problem, file types such as fragmented MPEG-4 have an index (or similar) at the end of the file. However, this often means that the entire file is required before the index is available, for example where a file is provided using the HTTP protocol which always transfers files linearly from start to finish.

The present invention seeks to mitigate the above-mentioned problems. Alternatively or additionally, the present invention seeks to provide improved methods of storing media files and returning file data for media files, and improved media file systems.

EP 1901304 describes a method of recording a video by parsing a video stream in units of Group of Pictures (GOP), and a video. The video recording method includes generating a predetermined number of Group of Pictures (GOP) into a single file, and storing the generated file, and storing the name of the file. Accordingly, use of storage space due to index file is avoided, and failure of high-speed playback due to a damaged index file is prevented.

### Summary of the Invention

The invention is defined by the features of the independent claims. Further embodiments are the subject-matter of the dependent claims. In accordance with a first aspect of the invention there is provided a method of storing essence data in a media file system, the method comprising the steps of:
receiving essence data associated with a time period;
generating a plurality of media files, wherein each media file is associated with a subperiod of the time period of the received essence data, and comprises:
   one or more portions of essence data derived from the part of the received essence data associated with the subperiod; and
   an index associating times of the subperiod with locations of essence data within the media file;
determining a filename for each media file, wherein the filename for each media file is indicative of a time of the subperiod associated with the media file; and
storing the media files in the media file system with the determined filenames.

By storing segments of the essence data in a plurality of different media files, each media file need only be of small size even where there is a long duration of essence data. This means the media files can be generated and made fully available quickly, without it being necessary to wait for all of the essence data to be received first. Further, by giving each media file a determined name indicative of a time of the essence data of the media file, the filenames can be used to find the media file with a particular essence data. In addition, existing file system optimisations for indexing, accessing and the like will be enjoyed by the multiple files, and existing optimised file copying and synchronisation tools such as xcopy, torrenting and the like can be used with the multiple files.

Preferably, the filename of each media file is indicative of the beginning of the subperiod associated with the media file. Alternatively and/or additionally, the filename of each media file is indicative of the end of the subperiod associated with the media file. It will be appreciated that any suitable way of indicating by the filename the subperiod of the essence data that the media file contains could be used.

The filename of each media file may include a timestamp for the time of the subperiod associated with the media file. Alternatively and/or additionally, the filename of each media file may include a frame number for the time of the subperiod associated with the media file.

Advantageously, the method further comprises the step of:
determining a directory for each media file, wherein the name of the directory is indicative of a time of the subperiod associated with the media file;
and the media files are stored in the media file system within the determined directories. This allows the media files to be separated into separate directories, so that the number of media files in a directory is not excessive, while the directory name can be used to locate a media file with required essence data.

Advantageously, the media files are stored in an archive file in the media file system. In this case, advantageously the archive file is a compressed-data archive file.

Advantageously, the method further comprises the step of storing a file in the media file system containing no essence data, to indicate the end of the time period associated with the received essence data.

Each media file may comprise only one portion of essence data.

The one or more portions of essence data may be GOPs, in particular where the essence data includes video data. Each media file may be an MPEG-4 file. Alternatively, each media file may be an audio file.

In accordance with a second aspect of the invention there is provided a method of retrieving essence data from a media file system stored as described above, the method comprising the steps of:
receiving a request for essence data, the request being indicative of a time;
determining the media file in which the essence data is stored, wherein the determination is done using the filename of the media file and the time indicated by the request;
returning, using the index of the determined media file, the requested essence data from the determined media file.

In this way, requested essence data can be found and returned.

Advantageously, the method further comprises the step of:
determining the directory in which the media file is stored, wherein the determination is done using the name of the directory and the time indicated by the request. Thus, where the media files are stored in directories with determined names, again required essence data can be found and returned.

In accordance with a third aspect of the invention there is provided a computing device comprising a processor, memory and storage, arranged to provide using the processor and memory a media file system that stores media files in the storage in accordance with any of the methods described above.

In accordance with a fourth aspect of the invention there is provided a computer program product arranged, when executed, to perform any of the methods described above.

In accordance with a fifth aspect of the invention there is provided a computer program product arranged, when executed on a computing device, to provide a computing device as described above.

In an aspect there is provided an apparatus comprising a processor and a data storage, configured to store essence data and subsequently retrieve the essence data when requested, the apparatus configured to:
receive essence data associated with a time period;
generate a plurality of media files, wherein each media file is associated with a subperiod of the time period of the received essence data, and comprises:
   one or more portions of essence data derived from the part of the received essence data associated with the subperiod; and
   an index associating times of the subperiod with locations of essence data within the media file;
   determine a filename for each media file, wherein the filename for each media file is indicative of a time of the subperiod associated with the media file;
   store the media files in the media file system with the determined filenames; and
   the apparatus further configured to enable the subsequent retrieval of the essence data, the apparatus configured to:
      receive a request for the essence data, the request being indicative of a time;
      determine a media file, of the plurality of media files, in which the essence data is stored, wherein the determination is done by matching the filename of the media file to the time indicated by the request;
         return the requested essence data from the determined media file.

Aspects provide a method for storing essence data in a media file system and subsequently retrieving that essence data from the media file systems.

For example, an aspect provides a method of storing essence data in a media file system and subsequently retrieving essence data from the media file system, the method comprising the steps of:
receiving essence data associated with a time period;
generating a plurality of media files, wherein each media file is associated with a subperiod of the time period of the received essence data, and comprises:
   one or more portions of essence data derived from the part of the received essence data associated with the subperiod; and
   an index associating times of the subperiod with locations of essence data within the media file;
   determining a filename for each media file, wherein the filename for each media file is indicative of a time of the subperiod associated with the media file; and
   storing the media files in the media file system with the determined filenames; and
   retrieving essence data from the media file system, the retrieval comprising:
      receiving a request for essence data, the request being indicative of a time;
      determining a media file, of the plurality of media files, in which the essence data is stored, wherein the determination is done by matching the filename of the media file to the time indicated by the request; and
      returning the requested essence data from the determined media file.

The filename of each media file may be indicative of the beginning of the subperiod associated with the media file.

The filename of each media file may be indicative of the end of the subperiod associated with the media file.

The filename of each media file may include a timestamp for the time of the subperiod associated with the media file.

The filename of each media file may include a frame number for the time of the subperiod associated with the media file.

The method may further comprise the step of:
determining a directory for each media file, wherein the name of the directory is indicative of a time of the subperiod associated with the media file; and wherein the media files are stored in the media file system within the determined directories.

The media files may be stored in an archive file in the media file system, preferably wherein the archive file may be a compressed-data archive file.

The method may further comprise the step of storing a file in the media file system containing no essence data, to indicate the end of the time period associated with the received essence data.

Each media file may comprise only one portion of essence data.

The one or more portions of essence data may be GOPs, preferably wherein each media file may be an MPEG-4 file.

Returning the requested essence data from the determined media file may comprise using an index of the determined media file.

The method may further comprise the step of:
determining the directory in which the media file is stored, wherein the determination is done using the name of the directory and the time indicated by the request.

A computing device comprising a processor, memory and file storage means (such as non-volatile memory) may be arranged to provide a media file system that stores media files in the storage in accordance with any of the methods described or claimed herein, and is configured to enable the retrieval of the media files.

Aspects provide a computer program product configured to program a processor to perform any of the methods described or claimed herein.

It will of course be appreciated that features described in relation to one aspect of the present invention may be incorporated into other aspects of the present invention. For example, the method of the invention may incorporate any of the features described with reference to the apparatus of the invention and *vice versa.*

### Description of the Drawings

Embodiments of the present invention will now be described by way of example only with reference to the accompanying schematic drawings of which:
Figure 1 shows the structure of a conventional MPEG-4 file;
Figure 2 is a schematic diagram of a computing device providing a media file system in accordance with an embodiment of the present invention;
Figure 3 is a flow chart showing the operation of the media file system of the computing device of Figure 2 when storing essence data;
Figure 4 is a schematic diagram of media files stored in the media file system of the computing device of Figure 2;
Figure 5 is a flow chart showing the operation of the media file system of the computing device of Figure 2 when retrieving essence data; and
Figure 6 is a schematic diagram of media files stored in an alternative arrangement in the media file system of the computing device of Figure 2.

### Detailed Description

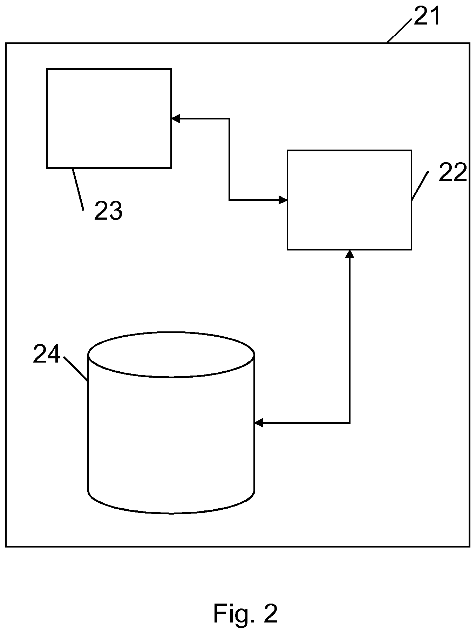

A computing device that provides a media file system in accordance with an embodiment of the invention is shown in Figure 2. The computing device 21 may be a personal computer, server or any other appropriate device.

The computing device 21 comprises a processor 22, which may be a single processor, dual processor or any other suitable processing system. The processor 22 is in communication with memory 23 which provides working memory the processor 22 during its operation, and storage 24 in which files can be stored. The memory 23 may be volatile memory and the storage 24 non-volatile memory, but it will be appreciated that other suitable types of memory/storage could be used.

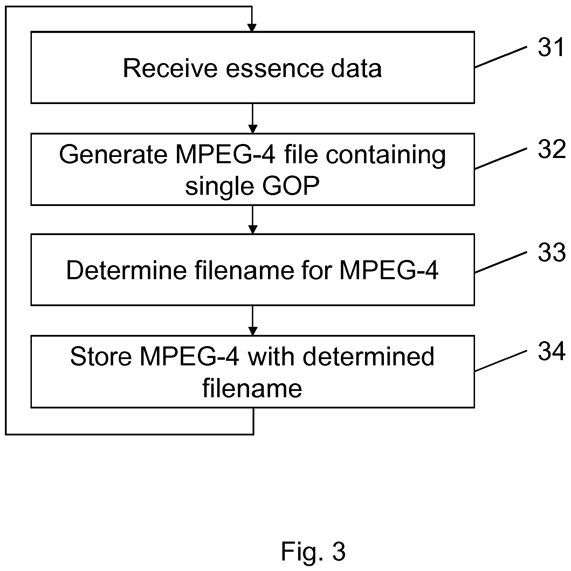

The computing device 21 provides, using the processor 22 and memory 23, a media file system. The media file system, amongst other things, stores media files in, and retrieves them from, the storage 24. A flowchart showing the operation of the media file system when receiving essence data and using it to generate media files is shown in Figure 3.

First, the media file system receives the essence data (step 31). In the present example the received essence data is video data, but the invention is equally applicable to audio data. The essence data may, for example, be a stream of essence data from the recording of a live event, or any other suitable essence data. The essence data may be received over a network, for example over the Internet.

The media file system then uses a predetermined amount of the received essence data to generate an MPEG-4 file which contains only a single GOP (step 32). In the present embodiment the predetermined amount of essence data is a fixed time period of essence data, for example the essence data corresponding to 2 seconds of video. In other embodiments different time periods of essence data may be used, or the predetermined amount may not be a fixed time period, for example it may be the smallest GOP satisfying certain desirable properties. In still other embodiments, the MPEG-4 file may contain more than one GOP, for example two or three GOPs. The MPEG-4 file may, for example, contain essence data for a fixed time period of (say) 10 seconds, but split into however many GOPs are appropriate given the content of the video.

The media file system then determines a filename for the MPEG-4 file (step 33), which is indicative of the time period of the essence data in the MPEG-4 file. In the present embodiment, the filename is the beginning time of the essence data in the MPEG-4 file. The MPEG-4 file is then stored in the storage 23, with the determined filename (step 34).

The process then repeats, with further MPEG-4 files being generated and stored with determined filenames for successive time periods of essence data.

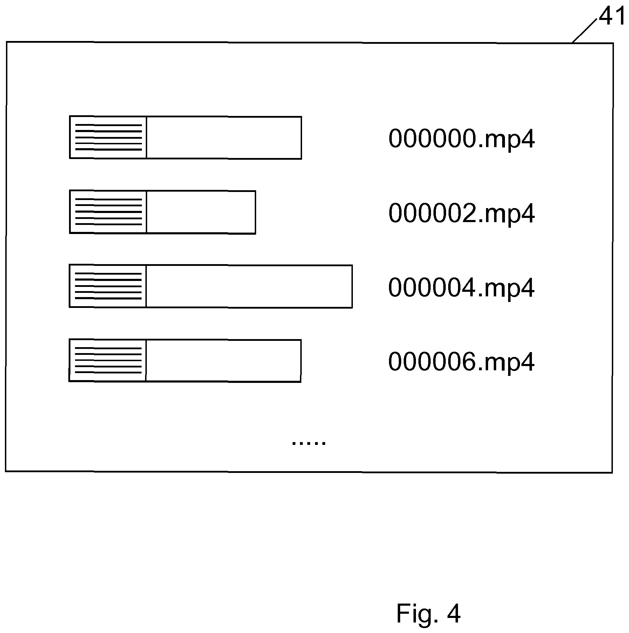

Figure 4 is a schematic diagram of media files generated and stored in the storage 23 by the media file system. The media files are stored in a single directory 41. As can be seen, there are MPEG-4 files 000000.mp4, 000002.mp4, 000004.mp4, 000006.mp4 etc., which contain the essence data for the time periods from 0 to 2 seconds, 2 to 4 seconds, 4 to 6 seconds and 6 to 8 seconds respectively. While each MPEG-4 file contains a fixed duration of essence data, due to differences in compression the resulting MPEG-4 files are of different sizes, as indicated schematically in Figure 4.

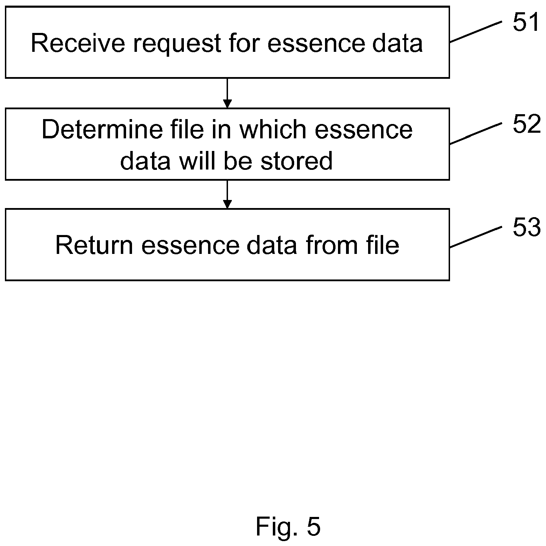

A flowchart showing the operation of the media file system when receiving a request for essence data is shown in Figure 5.

First, the media file system receives the request for essence data (step 51). In particular, the media file system receives a request for essence data for a particular time period, for example from 5 to 6 seconds.

The media file system then determines the media file in which the essence data will be stored (step 52). In the case that the media files contain a fixed duration of essence data, this can be determined without needing to consider any of the media files actually stored in the file system; so in the example above in which the fixed duration is 2 seconds, it can immediately be determined that the essence data must be in the media file 000004.mp4. In other embodiments, particular where the essence data in a media file is not of a fixed duration, it may be necessary to consider the filenames of the stored media files, to find the required media file. It may also be necessary to consider the index of a stored media file, to determine its duration so exactly the time period of essence data it contains.

Once the required media file has been determined, the required essence data that it contains is obtained and returned (step 53).

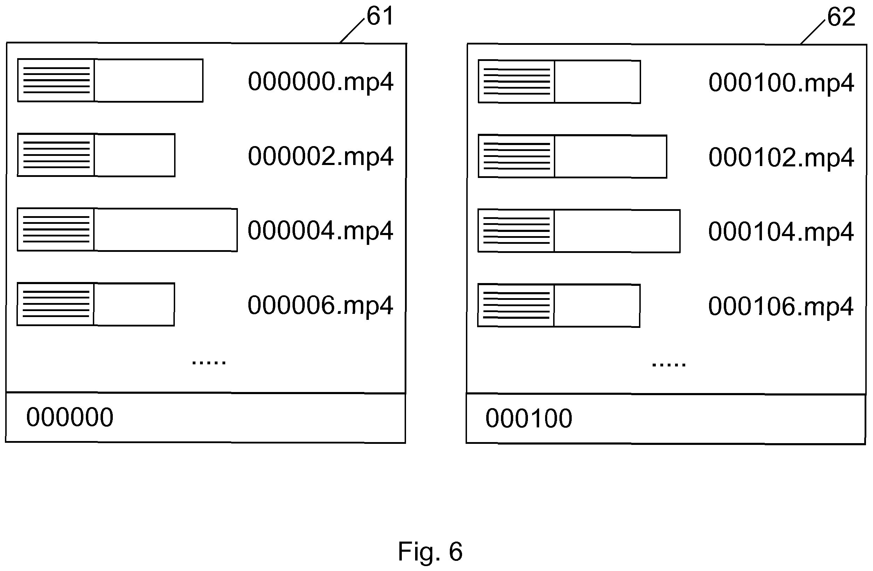

In an alternative embodiment, when essence data is received and a media file generated and stored, as well as determining a filename for the media file, a directory in which to store the media file is determined. Figure 6 is a schematic diagram of media files generated and stored in the storage 23 by the media file system in this way. The media files are stored in a multiple directories 61, 62. A first directory 61 named 000000 contains the MPEG-4 files 000000.mp4, 000002.mp4, 000004.mp4, 000006.mp4 etc., while a second directory 62 named 000000 contains MPEG-4 files 000100.mp4, 000102.mp4, 000104.mp4, 000106.mp4 etc. So, as can be seen, each directory contains media files for 100 seconds of essence data, and the name of the directory indicates the beginning time of the essence data stored in the media files in the directory, and the methods of storing essence data and retrieving essence data are adapted to determine the appropriate directory as well as filename. In this way, In this way, the number of files in a single directory is limited.

In alternative embodiments, the time period for a file may be indicated in alternative and/or additional ways. The filename may alternatively or additionally include the end time of the essence data in the MPEG-4 file. Instead of indicating the time period by means of times, the filename may include the frame numbers of the first and/or last frames, for example. (The relevant time for the essence data can be determined from the frame number and the frame rate for the essence data, of course.) It will be appreciated that in embodiments in which director names are determined as well as filenames, they may also indicate the relevant time period in different ways.

In embodiments of the invention, a file not containing essence data, for example a zero-byte file, is stored to indicate the end of the available essence data. For example, a zero-byte file names 000200.mp4 may be used to indicate that no essence data from 200 seconds onwards is available.

In embodiments of the invention, essence data may be received out of time order. In this case, placeholder files not containing essence data, again for example zero-byte files, are stored to indicate where essence data is missing. Alternatively, only media files for received essence data may be stored, as it can be determined from the filenames, if necessary in conjunction with the indexes of the existing media files, which essence data is available.

Determining the media file in which the essence data is stored (step 52, above) may be performed by matching the time period requested to the filename of the media files. For example, the filenames of the media files are indicative of a time of the subperiod associated with the media file. They could be named according to the entire period they cover (e.g. the filename may include the start and end time). The filename could include the end time of the essence data it contains, for example the files could be named according to the time at which they end. Or (as shown in the above example) the filename could include the start time of the essence data it contains, for example the files could be named according to the time at which they start. To match a media file to the time (or time period) indicated by the request the time indicated by the request may be compared to the filenames. In some embodiments the beginning of the requested time period may be compared to each of the filenames in turn (assuming the media file is named according to the start time of the essence data stored within it, as shown in the above example). A first media file may be identified with a filename that is numerically larger than the start time of the requested time, then the previous media file in the sequence may be identified as containing the essence data corresponding to the start time of the requested time period, and therefore may be a first match. The process may be repeated for the end time of the requested time period. All of the media files between the first identified media file and the last identified media file may then be selected to be included in the match sequence.

It is noted that in some embodiments the method includes both storing and retrieving media files, however in other embodiments methods exist that comprise simply storing the media file, or simply retrieving the media file, rather than a combination of the two.

A client such as a media file device may request media files or information from the media file system. Such devices may be connected to the media file system via a gateway by a network, such as a local area network, or a wide area network. The client application may request information regarding a specified time period of essence data.

The embodiments shown in the Figures are merely exemplary, and include features which may be generalised, removed or replaced as described herein and as set out in the claims. With reference to the drawings in general, it will be appreciated that schematic functional block diagrams are used to indicate functionality of systems and apparatus described herein. The functionality need not be divided as illustrated in the drawings, and the drawings need not be taken to imply any particular structure of hardware other than that described and claimed herein. The function of one or more of the elements shown in the drawings may be further subdivided, and/or distributed throughout apparatus of the disclosure. In some embodiments the function of one or more elements shown in the drawings may be integrated into a single functional unit.

The above embodiments are to be understood as illustrative examples. Further embodiments are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

In some examples, one or more memory elements can store data and/or program instructions used to implement the operations described herein. Embodiments of the disclosure provide tangible, non-transitory storage media comprising program instructions operable to program a processor to perform any one or more of the methods described and/or claimed herein and/or to provide data processing apparatus as described and/or claimed herein.

Any of the activities and apparatus outlined herein may be implemented with fixed logic such as assemblies of logic gates or programmable logic such as software and/or computer program instructions executed by a processor. Other kinds of programmable logic include programmable processors, programmable digital logic (e.g., a field programmable gate array (FPGA), an erasable programmable read only memory (EPROM), an electrically erasable programmable read only memory (EEPROM)), an application specific integrated circuit, ASIC, or any other kind of digital logic, software, code, electronic instructions, flash memory, optical disks, CD-ROMs, DVD ROMs, magnetic or optical cards, other types of machine-readable mediums suitable for storing electronic instructions, or any suitable combination thereof. Such data storage media may also provide the data storage of the media file system. In some embodiments the gateway comprises a network interface configured to connect the media file system with a client such as a device or application which provides the request for a specific time period of media file data.

While the present invention has been described and illustrated with reference to particular embodiments, it will be appreciated that the invention lends itself to many different variations not specifically illustrated herein.

## Claims

1. A computer implemented method of storing essence data in a media file system, the method comprising the steps of:
receiving essence data associated with a time period (31);
generating a plurality of media files, wherein each media file is associated with a subperiod of the time period of the received essence data (32), and comprises:
one or more portions of essence data derived from the part of the received essence data associated with the subperiod; and
an index associating times of the subperiod with locations of essence data within the media file;
determining a filename for each media file, wherein the filename for each media file is indicative of a time of the subperiod associated with the media file (33); and
storing the media files in the media file system with the determined filenames (34).

2. A computer implemented method as claimed in claim 1, wherein the filename of each media file is indicative of the beginning of the subperiod associated with the media file.

3. A computer implemented method as claimed in claim 1 or 2, wherein the filename of each media file is indicative of the end of the subperiod associated with the media file.

4. A computer implemented method as claimed in any preceding claim, wherein the filename of each media file includes a timestamp for the time of the subperiod associated with the media file.

5. A computer implemented method as claimed in any preceding claim, wherein the filename of each media file includes a frame number for the time of the subperiod associated with the media file.

6. A computer implemented method as claimed in any preceding claim, further comprising the step of:
determining a directory for each media file, wherein the name of the directory is indicative of a time of the subperiod associated with the media file;
and wherein the media files are stored in the media file system within the determined directories.

7. A computer implemented method as claimed in any preceding claim, wherein the media files are stored in an archive file in the media file system, for example wherein the archive file is a compressed-data archive file.

8. A computer implemented method as claimed in any preceding claim, further comprising the step of storing a file in the media file system containing no essence data, to indicate the end of the time period associated with the received essence data.

9. A computer implemented method as claimed in any preceding claim, wherein each media file comprises only one portion of essence data.

10. A computer implemented method as claimed in any preceding claim, wherein the one or more portions of essence data are GOPs.

11. A computer implemented method as claimed in claim 10, wherein each media file is an MPEG-4 file.

12. A computer implemented method of retrieving essence data from a media file system stored in accordance with any of claims 1 to 11, the method comprising the steps of:
receiving a request for essence data (51), the request being indicative of a time;
determining the media file in which the essence data is stored (52), wherein the determination is done using the filename of the media file and the time indicated by the request;
returning, using the index of the determined media file, the requested essence data from the determined media file (53), for example further comprising the step of:
determining the directory in which the media file is stored, wherein the determination is done using the name of the directory and the time indicated by the request.

13. A computing device comprising a processor, memory and storage, arranged to provide using the processor and memory a media file system that stores media files in the storage in accordance with the methods of any of claims 1 to 12.

14. A computer program product arranged, when executed, to perform the methods of any of claims 1 to 12.

## Patentansprüche

1. Computerimplementiertes Verfahren zum Speichern von Essenzdaten in einem Mediendateisystem, wobei das Verfahren die folgenden Schritte beinhaltet:
Empfangen (31) von Essenzdaten, die mit einer Zeitperiode assoziiert sind;
Erzeugen (32) mehrerer Mediendateien, wobei jede Mediendatei mit einer Teilperiode der Zeitperiode der empfangenen Essenzdaten assoziiert ist und Folgendes umfasst:
ein oder mehrere Teile von Essenzdaten, die von dem mit der Teilperiode assoziierten Teil der empfangenen Essenzdaten abgeleitet sind; und
einen Index, der Zeiten der Teilperiode mit Orten von Essenzdaten innerhalb der Mediendatei assoziiert;
Bestimmen (33) eines Dateinamens für jede Mediendatei, wobei der Dateiname für jede Mediendatei eine Zeit der mit der Mediendatei assoziierten Teilperiode anzeigt; und
Speichern (34) der Mediendateien in dem Mediendateisystem mit den bestimmten Dateinamen.

2. Computerimplementiertes Verfahren nach Anspruch 1, wobei der Dateiname jeder Mediendatei den Beginn der mit der Mediendatei assoziierten Teilperiode anzeigt.

3. Computerimplementiertes Verfahren nach Anspruch 1 oder 2, wobei der Dateiname jeder Mediendatei das Ende der mit der Mediendatei assoziierten Teilperiode anzeigt.2

4. Computerimplementiertes Verfahren nach einem vorherigen Anspruch, wobei der Dateiname jeder Mediendatei einen Zeitstempel für die Zeit der mit der Mediendatei assoziierten Teilperiode enthält.

5. Computerimplementiertes Verfahren nach einem vorherigen Anspruch, wobei der Dateiname jeder Mediendatei eine Frame-Nummer für die Zeit der mit der Mediendatei assoziierten Teilperiode enthält.

6. Computerimplementiertes Verfahren nach einem vorherigen Anspruch, das ferner den folgenden Schritt beinhaltet:
Bestimmen eines Verzeichnisses für jede Mediendatei, wobei der Name des Verzeichnisses eine Zeit der mit der Mediendatei assoziierten Teilperiode anzeigt;
und wobei die Mediendateien in dem Mediendateisystem innerhalb der bestimmten Verzeichnisse gespeichert werden.

7. Computerimplementiertes Verfahren nach einem vorherigen Anspruch, wobei die Mediendateien in einer Archivdatei in dem Mediendateisystem gespeichert sind, wobei die Archivdatei beispielsweise eine Archivdatei mit komprimierten Daten ist.

8. Computerimplementiertes Verfahren nach einem vorherigen Anspruch, das ferner den Schritt des Speicherns einer Datei in dem Mediendateisystem beinhaltet, die keine Essenzdaten enthält, um das Ende der mit den empfangenen Essenzdaten assoziierten Zeitperiode anzuzeigen.

9. Computerimplementiertes Verfahren nach einem vorherigen Anspruch, wobei jede Mediendatei nur einen Teil von Essenzdaten enthält.

10. Computerimplementiertes Verfahren nach einem vorherigen Anspruch, wobei die ein oder mehreren Teile von Essenzdaten GOPs sind.

11. Computerimplementiertes Verfahren nach Anspruch 10, wobei jede Mediendatei eine MPEG-4-Datei ist.

12. Computerimplementiertes Verfahren zum Abrufen von Essenzdaten aus einem Mediendateisystem, das gemäß einem der Ansprüche 1 bis 11 gespeichert ist, wobei das Verfahren die folgenden Schritte beinhaltet:
Empfangen (51) einer Anforderung für Essenzdaten, wobei die Anforderung eine Zeit angibt;
Bestimmen (52) der Mediendatei, in der die Essenzdaten gespeichert sind, wobei das Bestimmen anhand des Dateinamens der Mediendatei und der durch die Anforderung angegebenen Zeit erfolgt;
Zurückgeben (53), mittels des Indexes der bestimmten Mediendatei, der angeforderten Essenzdaten aus der bestimmten Mediendatei, das zum Beispiel ferner den folgenden Schritt beinhaltet:
Bestimmen des Verzeichnisses, in dem die Mediendatei gespeichert ist, wobei das Bestimmen anhand des Namens des Verzeichnisses und der durch die Anfrage angegebenen Zeit erfolgt.

13. Computergerät mit einem Prozessor, einem Memory und einem Speicher, ausgelegt zum Bereitstellen, mittels des Prozessors und des Memory, eines Mediendateisystems, das Mediendateien im Speicher gemäß den Verfahren nach einem der Ansprüche 1 bis 12 speichert.

14. Computerprogrammprodukt, das bei Ausführung zum Durchführen der Verfahren nach einem der Ansprüche 1 bis 12 ausgelegt ist.

## Revendications

1. Procédé mis en œuvre par ordinateur pour stocker des données d'essence dans un système de fichiers médias, le procédé comprenant les étapes consistant à :
recevoir des données d'essence associées à une période de temps (31);
générer une pluralité de fichiers médias, dans lequel chaque fichier média est associé à une sous-période de la période de temps des données d'essence reçues (32), et comprend :
une ou plusieurs parties de données d'essence dérivées de la partie des données d'essence reçues associées à la sous-période; et
un index associant des temps de la sous-période à des emplacements de données d'essence dans le fichier média;
déterminer un nom de fichier pour chaque fichier média, dans lequel le nom de fichier pour chaque fichier média est indicatif d'un temps de la sous-période associée au fichier média (33); et
stocker les fichiers médias dans le système de fichiers médias avec les noms de fichiers déterminés (34).

2. Procédé mis en œuvre par ordinateur selon la revendication 1, dans lequel le nom de fichier de chaque fichier média est indicatif du début de la sous-période associée au fichier média.

3. Procédé mis en œuvre par ordinateur selon la revendication 1 ou 2, dans lequel le nom de fichier de chaque fichier média est indicatif de la fin de la sous-période associée au fichier média.

4. Procédé mis en œuvre par ordinateur selon l'une quelconque des revendications précédentes, dans lequel le nom de fichier de chaque fichier média comprend un horodatage pour le temps de la sous-période associée au fichier média.

5. Procédé mis en œuvre par ordinateur selon l'une quelconque des revendications précédentes, dans lequel le nom de fichier de chaque fichier média comprend un numéro de trame pour le temps de la sous-période associée au fichier média.

6. Procédé mis en œuvre par ordinateur selon l'une quelconque des revendications précédentes, comprenant en outre l'étape consistant à :
déterminer un répertoire pour chaque fichier média, dans lequel le nom du répertoire est indicatif d'un temps de la sous-période associée au fichier média;
et dans lequel les fichiers médias sont stockés dans le système de fichiers médias dans les répertoires déterminés.

7. Procédé mis en œuvre par ordinateur selon l'une quelconque des revendications précédentes, dans lequel les fichiers médias sont stockés dans un fichier d'archive dans le système de fichiers médias, par exemple dans lequel le fichier d'archive est un fichier d'archive de données compressées.

8. Procédé mis en œuvre par ordinateur selon l'une quelconque des revendications précédentes, comprenant en outre l'étape consistant à stocker un fichier dans le système de fichiers médias ne contenant pas de données d'essence, pour indiquer la fin de la période de temps associée aux données d'essence reçues.

9. Procédé mis en œuvre par ordinateur selon l'une quelconque des revendications précédentes, dans lequel chaque fichier média ne comprend qu'une partie des données d'essence.

10. Procédé mis en œuvre par ordinateur selon l'une quelconque des revendications précédentes, dans lequel les une ou plusieurs parties de données d'essence sont des GOP.

11. Procédé mis en œuvre par ordinateur selon la revendication 10, dans lequel chaque fichier média est un fichier MPEG-4.

12. Procédé mis en œuvre par ordinateur pour récupérer des données d'essence à partir d'un système de fichiers médias, stockées conformément à l'une quelconque des revendications 1 à 11, le procédé comprenant les étapes consistant à :
recevoir une demande de données d'essence (51), la demande étant indicative d'un temps;
déterminer le fichier média dans lequel les données d'essence sont stockées (52), dans lequel la détermination est effectuée en utilisant le nom de fichier du fichier média et le temps indiqué par la demande;
renvoyer, en utilisant l'index du fichier média déterminé, les données d'essence demandées à partir du fichier média déterminé (53), comprenant par exemple en outre l'étape consistant à :
déterminer le répertoire dans lequel le fichier média est stocké, dans lequel la détermination est effectuée en utilisant le nom du répertoire et le temps indiqué par la demande.

13. Dispositif informatique comprenant un processeur, une mémoire et un stockage, agencé pour fournir, en utilisant le processeur et la mémoire, un système de fichiers médias qui stocke des fichiers médias dans le stockage conformément aux procédés de l'une quelconque des revendications 1 à 12.

14. Produit programme d'ordinateur agencé, lorsqu'il est exécuté, pour réaliser les procédés de l'une quelconque des revendications 1 à 12.
